# EUROPEAN PATENT SPECIFICATION

(11) **EP 2 319 202 B1**
(45) Date of publication and mention of the grant of the patent: **22.06.2016**
(21) Application number: 08786538.2
(22) Date of filing: 28.07.2008
(51) Int. Cl.: H04B 10/296, H04J 14/02

(54) **CHANNEL POWER CONTROL IN AN OPTICAL NETWORK NODE**
KANALLEISTUNGSREGELUNG IN EINEM OPTISCHEN NETZWERKKNOTEN
COMMANDE DE PUISSANCE DE CANAL DANS UN NOEUD DE RÉSEAU OPTIQUE

(43) Date of publication of application: 11.05.2011
(73) Proprietor: Telefonaktiebolaget LM Ericsson (publ), 164 83 Stockholm (SE)
(72) Inventor: CALLAN, Paul, Alexander, Loughborough Leicestershire LE11 3SG (GB)
(74) Representative: Parkinson, Neil Scott
(86) International application number: PCT/EP2008/059897
(87) International publication number: WO 2010/012297

(56) References cited:
- WO-A-00/69099
- GB-A- 2 411 044
- US-A1- 2002 176 156
- US-A1- 2004 036 958
- KILPER D C ET AL: "Control of Channel Power Instabilities in Constant-Gain Amplified Transparent Networks Using Scalable Mesh Scheduling" JOURNAL OF LIGHTWAVE TECHNOLOGY, IEEE SERVICE CENTER, NEW YORK, NY, US, vol. 26, no. 1, 1 January 2008 (2008-01-01), pages 108-113, XP011204215 ISSN: 0733-8724

## Description

### TECHNICAL FIELD

The present invention relates to methods and apparatus for controlling the power of a channel in a node of an optical network. Embodiments of the invention are particularly suitable for controlling the power of a channel introduced in an optical network. Embodiments of the present invention are also particularly suitable for, but not limited to, controlling the operation of variable optical attenuators in an Automatically Switched Optical Network (ASON).

### BACKGROUND

Wavelength division multiplexing is the transmission of several different signals via a single optical transmission medium (e.g. fibre), by sending each signal ("channel") at a different optical frequency or wavelength. A multiplexer is used to combine the different channels together for transmission, and a demultiplexer is used to separate the channels following transmission. WDM optical transmission systems are typically composed of a number of spans of optical fibre linking together the network nodes.

Early WDM networks used simple, fixed optical filters to route the optical signals between the network nodes. Such networks were therefore essentially "static" i.e. the channel configuration (number of channels being transmitted, and the routing of the channels through nodes of the network) did not change, except during fault conditions or due to human intervention to upgrade or alter the network configuration.

More recent WDM networks can include reconfigurable optical network nodes, which allow remote reconfiguration of the channels, faster provisioning of new channels and improved network resilience. Such reconfigurable optical network nodes commonly employ integrated optical devices, such as ROADM (Reconfigurable Optical Add-Drop Multiplexer) or WSS (Wavelength-Selective Switch) devices or similar, in order to control and route the optical signals. Although discrete optical devices can be used to provide the same functionality, generally it is cheaper to utilise integrated devices for high channel-count WDM networks.

Autonomous rerouting of traffic is relatively well known in single-channel optical networks such as SDH (Synchronous Digital Hierarchy) where it is commonly known as ASTN (Automatically Switched Transport Network). In the more advanced versions of WDM networks, the network control software can also autonomously reroute traffic according to the demands on the network e.g. faults, changing bandwidth requirements etc, thus reducing the need for human intervention. Such a WDM network is commonly referred to as ASON (Automatically Switched Optical Network).

In general, signal regeneration using optical-electronic-optical conversion is not performed at every node, but only where necessary to restore signal quality. Hence, the routing and transmission of signals from node to node is generally performed in the optical domain.

It is desirable to control the power levels of each of the channels in an optical system. Optical signals experience wavelength dependent effects as they are transmitted across the network, including fibre and optical device attenuation, Raman scattering within the optical fibre, optical amplifier wavelength dependent gain etc. It is particularly desirable to control the optical signal power as channels are added to the network, to prevent disruption to existing established channels or radiation power surges which can interfere with existing channels e.g. due to the channels being amplified by non-linear devices such as erbium doped fibre amplifiers.

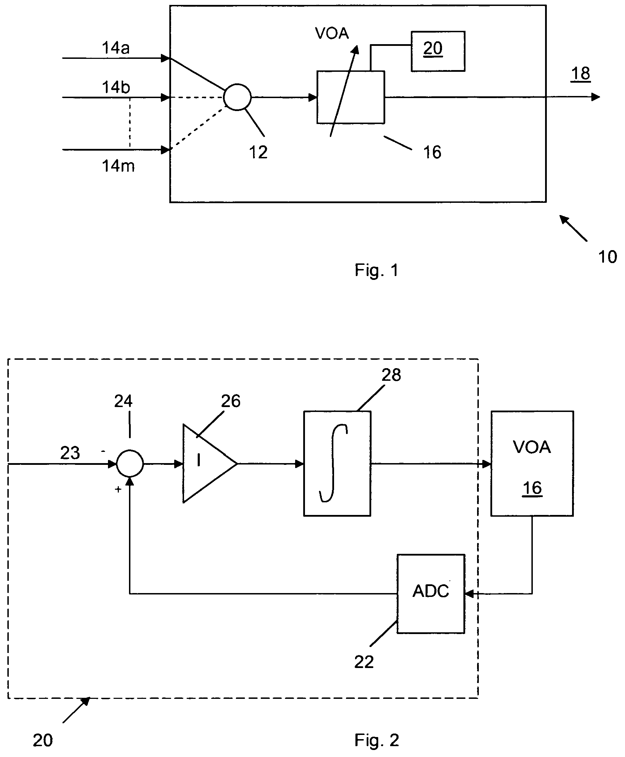

Figure 1 is a schematic diagram of a device 10 suitable for use in an ASON node, for wavelength switching and control of optical power.

The device 10 comprises a port selector switch 12 which is operable to couple any one of a plurality of input ports 14a, 14b...14m to a Variable Optical Attenuator (VOA) 16. The port selector switch 12 thus acts to select an optical signal path by switching to a particular port, thus directing an optical signal along a desired route through the network. The VOA 16 controls the power of the optical signal transmitted to the output port 18, keeping the channel power within an acceptable dynamic range.

In order to keep the optical signal within the acceptable dynamic range, the VOA 16 will be coupled to a controller 20. Figure 2 is a schematic diagram showing the functional blocks provided by the controller 20. The controller 20 provides a closed-loop control of the channel power. A power monitor function is provided at each node which continuously measures the individual channel powers at each line port (e.g. at line port 18). Such monitoring is usually carried out only after the VOA for cost reasons, although in some cases it may also be done before the VOA. Typically, the channel power is sampled by an analogue to digital converter (ADC) 22, with adjustments being made to the appropriate VOA attenuation at predetermined regular intervals. The period between one VOA update and the next is termed the control cycle. During each cycle, the ADC reading is taken, suitably processed, and subtracted from the target channel input power 23.

In Figure 2, the signs at the summing point 24 which take the measured channel power value from the ADC 22 and compare it with the target channel power 23 to generate an error signal are reversed compared to a conventional control loop diagram, because an increase in attenuation gives a decrease in channel power. The error value is used to determine the magnitude and direction of the next change in the VOA setting (the "step-size"). The step-size is typically determined according to a conventional control algorithm, such as a PID (Proportional-Integral-Derivative) which is often implemented as an algorithm in the digital domain. In the example shown in Figure 2, the PID algorithm is assumed to consist only of an integral (I) term 26, whereby the next step-size is calculated as a direct multiple of the error signal. The multiplication factor used is termed the "Integral gain" or simply the "gain" of the control loop. Once every cycle, the calculated step-size is added to an accumulator 28, the output of which represents the current value of VOA attenuation i.e. the output signal is the control signal to control the attenuation of the VOA 16.

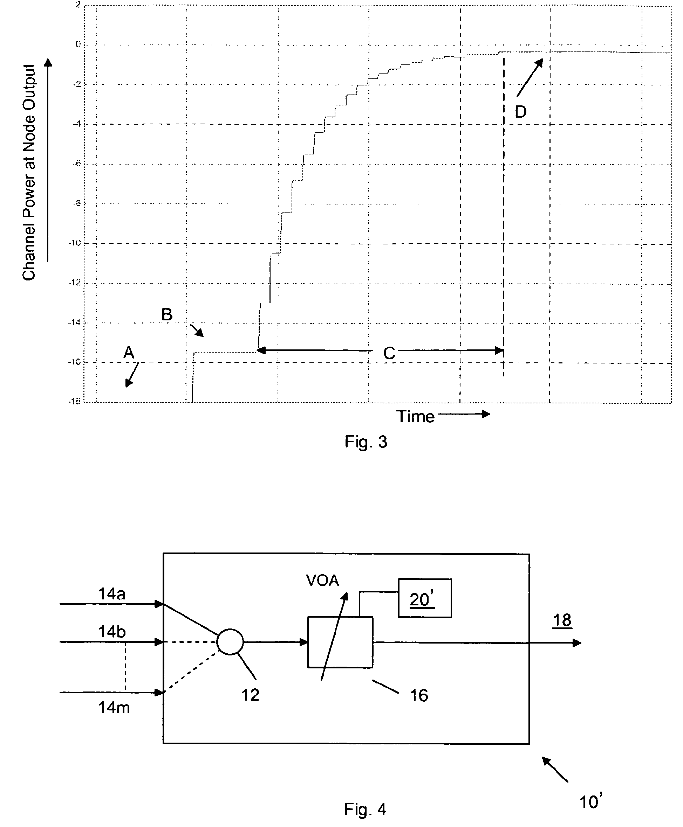

Figure 3 shows the typically progression of optical channel power at the output of a node, as a channel is introduced to the node. The horizontal axis shows time on an arbitrary scale and the vertical axis shows optical power on an arbitrary decibel (dB) scale.

At the beginning of the process (state A) the VOA 16 is at maximum attenuation (in the blocking state) causing the channel power at the output of the device (and hence the node) to be negligible. This is typically the quiescent state of the device, in order to minimise the transmission of optical noise power through the node. Such noise can be produced during optical amplification of signals at upstream nodes.

To introduce the channel, the VOA 16 is first adjusted to a predetermined "safe" value (state B in Figure 3) in order to perform an initial calibration step. This step is necessary only in cases where the optical power is only monitored after the VOA 16, due to the channel power at the input to the VOA being unknown. If the input power of the optical signal supplied to the node was unexpectedly high and the VOA was subsequently set to a low attenuation, the resulting very high output power of the signal from the node could cause a disturbance to pre-existing channels along the channel route, and even damage the downstream optical detectors. Hence, this initial attenuation value of the VOA is chosen such that it results in an acceptably low channel output power after taking into account the various component tolerances and likely range of input powers. It will be appreciated that this step (state B) is not required if the power of the optical signal input to the VOA 16 is known.

Once the initial calibration step has been performed by reading the channel output power, the control loop algorithm illustrated in Figure 2 is activated, and the PID algorithm then begins to reduce the VOA attenuation, producing the steps seen in time interval C in Figure 3. Thus, the power of the channel gradually approaches the target output power, with the change in channel power for each step decreasing as the target channel power is approached, until the channel power at the node output substantially reaches the target channel power (i.e. state D). It will be seen that the output power takes about 20 steps (i.e. about 20 control cycles) to move from the safe value (state B) to the target value (state D). Subsequently, the PID algorithm will act to control the VOA attenuation such that the optical power output is maintained at, or close to, the target channel power.

GB2411044 relates to a multichannel optical amplifier having an adjustable gain set point controlled to permit substantially constant gain tilt control during a gain set-point change (change in gain level) so that the channel powers are maintained during system modification. A PI (proportional and integral) controller is arranged to change the gain tilt adaptation profile in response to a change in the gain set-point to allow for the different gain characteristics of the amplifier at different gain set-points.

### SUMMARY

In a first aspect, the present invention provides a control system for a variable optical attenuator. The system comprises a processing element arranged to:
(a) receive a signal indicative of the radiation power of an optical signal output from a variable optical attenuator;
(b) determine an error signal in dependence upon the received signal and a predetermined target radiation power level;
(c) determine a control signal for controlling the attenuation of the variable optical attenuator in dependence upon the error signal and a gain factor; and
(d) repeat the operations of (a) to (c).
The control system is arranged to utilise a first value of the gain factor during a first time period and a second, lower value of the gain factor during a second time period. The first time period comprises a time interval after the optical signal has been introduced to the optical attenuator.

Such a control system allows the variable optical attenuator to reduce the time taken for the power of the optical output signal to reach the predetermined target radiation power level, whilst still maintaining stability of the optical signal within acceptable limits (to prevent overall power instability in any network containing the variable optical attenuator) by first using a higher then subsequently utilising a lower gain factor. Such a control system can thus improve the speed with which a chain of reconfigurable optical nodes can establish end-to-end transmission of an optical signal, providing a competitive advantage when employing ASON networks. Further, the corresponding relatively fast restoration of a link that can be provided by such a control system can be used to improve network resilience by quickly restoring back-up (protection) routes.

The system may be arranged to switch to utilising the second value from utilising the first value once the error signal is indicative of the radiation power of the output optical signal being within a predetermined range of the target radiation power level.

The control system may be arranged to switch to utilising the second value of the gain factor from utilising the first value of the gain factor a predetermined time period after a channel has been introduced to the optical attenuator.

The control system may be arranged to first provide a control signal to set the attenuation of the variable optical attenuator to a predetermined safe attenuation value upon an optical signal being introduced to the optical attenuator, and subsequently perform the operations of (a) to (d).

The control system may be arranged to output the determined control signal every control cycle.

The first value of the gain factor may be such that within three or less control cycles of introducing an optical signal to the variable attenuator, the error signal will be indicative of the radiation power of the output optical signal being substantially close to steady-state operation of the optical signal.

The first value of the gain factor may be substantially unity.

The second value of the gain factor may be less than a third of the first value of the gain factor.

In a second aspect, the present invention provides a method of controlling a variable optical attenuator. The method comprises
(a) receiving a signal indicative of the radiation power of an optical signal output from a variable optical attenuator;
(b) determining an error signal in dependence upon the received signal and a predetermined target radiation power level;
(c) determining a control signal for controlling the attenuation of the variable optical attenuator in dependence upon the error signal and a gain factor; and
(d) repeating steps (a) to (c).
The control system is arranged to utilise a first value of the gain factor during a first time period and a second, lower value of the gain factor during a second time period. The first time period comprises a time interval after the optical signal has been introduced to the optical attenuator.

In a third aspect, the present invention provides a data carrier carrying computer readable instructions for controlling a processor to carry out the above method.

In a fourth aspect, the present invention provides a control system comprising a programme memory storing processor readable instructions; and a processor configured to read and execute instructions stored in said programme memory. Said processor readable instructions comprise instructions for controlling the processor to carry out the above method.

In a fifth aspect, the present invention provides a device comprising at least one variable optical attenuator, and at least one control system as described above. Each of said at least one control system is coupled to said at least one variable optical attenuator for controlling the attenuation of said at least one variable optical attenuator.

The device may comprise a plurality of said variable optical attenuators, each arranged to controllably attenuate a different wavelength optical signal.

In a sixth aspect, the present invention provides an optical network comprising a plurality of nodes, with each of said nodes comprising at least one device described above.

The optical network may be arranged to transmit at least one optical signal along a route comprising said plurality of nodes, with each node on said route comprising at least one of said devices configured to control the power of said optical signal.

Each device on said route may be arranged to utilise the same first and second values of the gain factor.

Said network may be a mesh network, further comprising additional nodes, wherein optical signals of different wavelengths may traverse the network along different routes.

### BRIEF DESCRIPTION OF THE DRAWINGS

Preferred embodiments of the present invention will now be described, by way of example only, with reference to the accompanying drawings, in which;
Figure 1 is a schematic diagram of a Wavelength Selective Switch device comprising a selector switch coupled to a Variable Optical Attenuator (VOA) for power control;
Figure 2 is a schematic diagram illustrating the functional blocks associated with a known type of PID control algorithm for the VOA controller in Figure 1;
Figure 3 is a graph of optical output power has a function of time as a channel is introduced to the device illustrated in Figure 1, with the VOA being controlled by the controller of Figure 2;
Figure 4 is a schematic diagram of a Wavelength Selective Switch device comprising a selector switch coupled to a VOA, with an associated controller, in accordance with an embodiment of the present invention;
Figure 5 is a schematic diagram illustrating a control algorithm suitable for use in the controller of the VOA illustrated in Figure 4, in accordance with an embodiment of the present invention;
Figure 6 is a flow chart illustrating a method in accordance with an embodiment of the present invention;
Figure 7 is a graph illustrating optical output signal power as a function of time of a VOA controlled in accordance with an embodiment of the present invention;
Figure 8 is a schematic diagram illustrating an optical network comprising a plurality of nodes in which power control is performed in accordance with an embodiment of the present invention; and
Figure 9 shows the output power of a channel from nodes 1 & 2 of Figure 8.

### DETAILED DESCRIPTION

Figure 4 is a schematic diagram of a device 10' suitable for use in an ASON node, for wavelength switching and control of optical power.

For clarity, only a single wavelength path is shown i.e. this architecture would be replicated for each separate wavelength. Typically, 40 or 80 wavelength channels may be provided, each with a corresponding device 10'. Optical amplification and other functions may also be provided by the node by known devices, but the relevant devices are not illustrated here. For ease of an explanation, identical reference numerals are used to represent similar features throughout the figures.

It will be seen that the device 10' illustrated at Figure 4 is of generally similar architecture to the device 10 illustrated in Figure 1. The device 10' comprises a port selector switch 12, which is operable to couple any one of a plurality of input ports 14a, 14b...14m to a VOA 16. Each of the input ports can be coupled to a different optical signal path. The switch 12 thus acts to select the relevant optical signal path for onward transmission by the device, by switching to a particular port. The attenuation of the VOA 16 is controlled so as to control the power of the optical signal transmitted to the output port 18 of the device 10'. The VOA 16 is coupled to a controller 20', which provides a control signal to control the attenuation of the VOA 16, so as to keep the channel power within an acceptable dynamic range.

In a typical node, such a device 10' would be used at every line port in the transmit and/or receive direction depending on the node architecture. The transmit architecture is shown (i.e. with a plurality of selectable inputs, and a single output). The receive architecture by contrast comprises a single input port, and a plurality of selectable output ports. Both transmit and receive architectures would comprise a variable optical attenuator, for controlling the power of the optical signal transmitted through the device 10', and a corresponding controller 20'.

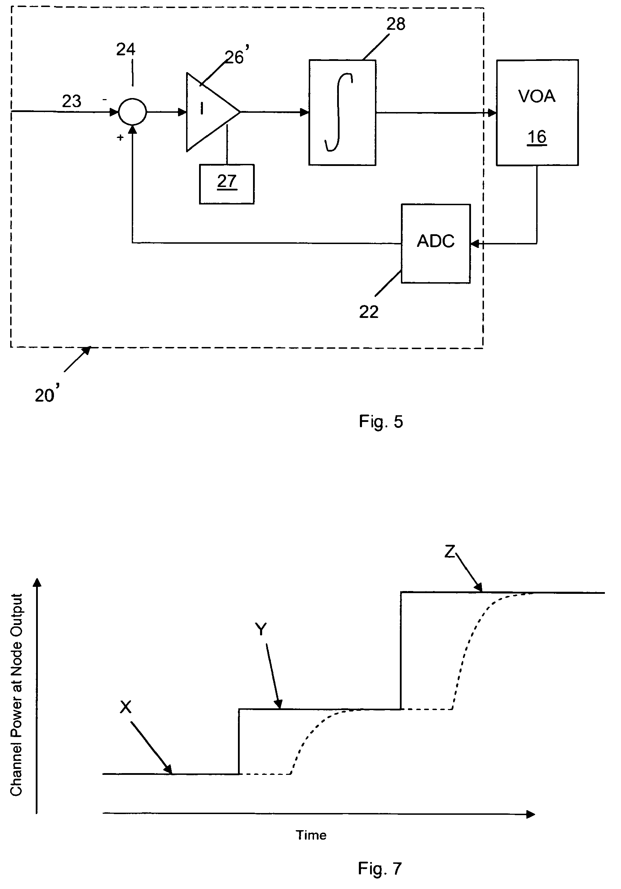

Figure 5 is a schematic diagram showing the functional blocks provided by the controller 20'. As with the controller 20 illustrated in Figure 2, the present controller 20' provides a closed-loop control of the attenuation of the VOA 16 (and hence the power of the optical signal being transmitted through the device 10'). The principle difference between the controller 20' and the controller 20 of Figure 2 is that the controller 20' alters the gain of the feedback loop with time. As will be explained in more detail below, this change in gain allows an initial relatively fast change in the power of the output optical signal as a function of time, to allow the output optical signal to reach a predetermined target radiation power level. Subsequently, the use of a different gain value maintains the stability of the optical signal within acceptable limits, and prevents any overall power instability that might arise if the initial gain factor were maintained.

The controller 20' includes a power monitor element (22) which continuously measures the individual channel power. Typically, such monitoring is carried out only after the VOA 16 for cost reasons, although in some implementations the channel power (i.e. the power of the optical signal) may also be measured before it enters the VOA 16. In the embodiment shown in Figure 5, the channel power is sampled by an analogue to digital converter 22. The output of the ADC 22 is a signal indicative of the radiation power of the optical signal output from the variable optical attenuator.

An error signal is then determined in dependence upon the signal indicative of the radiation power of the output optical signal and a predetermined target radiation power level. The target radiation power level is the desired optical signal output power. Such a predetermined target radiation power level may be set by the network management.

In the implementation shown in Figure 5, the error signal is generated by determining the difference between the signal indicative of the radiation power of the output optical signal and a signal 23 indicative of the predetermined target radiation power level. In particular, the summing point 24 determines the error signal by subtracting the signal 23 indicative of the predetermined target radiation power level from the signal indicative of the actual radiation power of the output optical signal.

The error signal is subsequently scaled in dependence upon a gain factor by integral functional element 26'. The gain factor is a multiplication factor, and is used to determine the gain of the control loop. In the example implementation shown in Figure 5, the product of the error signal with the gain factor determines the step size i.e. the increment or decrement in attenuation of the VOA that is required for the optical signal output power to approach the target radiation power level. Once every predetermined time interval, corresponding to a cycle of the control loop, the calculated step-size is added to the accumulator 28, the output of which represents the current value of VOA attenuation. The output of the accumulator 28 is thus provided to the VOA 16 as a control signal to control the attenuation of the VOA 16.

The controller 20' is arranged to iteratively repeat the steps of receiving the signal indicative of the radiation power of the optical output signal from the VOA, determine an error signal, and determine the control signal for controlling the attenuation of the VOA 16.

It is known for the network control software to autonomously re-route traffic according to the demands on the network e.g. faults, changing bandwidth requirements etc. For example, it is desirable to restore an end-to-end optical link after a fault in the network, by the creation of a new traffic path along a route which has not been affected by the fault. The faster this re-routing can be performed, the more quickly network traffic and/or resilience can be restored.

The present inventor has appreciated that new challenges are presented by the use of reconfigurable optical devices as may be used within photonic nodes.

For example, in many existing ASTN networks (i.e. non-WDM networks) the time to perform traffic restoration is limited chiefly by the speed of operation of ASTN management software, as the associated electronic switching hardware has much lower reconfiguration times. The general expectation is that when the equivalent functionality is deployed in WDM networks (e.g. to realise ASON), the operation times will be similar. However, the present inventor has appreciated that this is not likely to be the case.

In particular, the present inventor has realised that the reconfigurable optical devices used within photonic nodes cannot generally operate in the same time scales as the electronic equivalents used in single-channel systems. The time taken for such reconfigurable optical devices to perform optical switching (changing the routing of a signal from one port to another) and also optical "levelling" (changing the channel attenuation to adjust the optical output power of a channel to a desired target level) are limited by the optical response times of the technology used and/or the necessary data processing within the device. Thus, the time delay between channel power updates (i.e. the "control cycle" used by the controller) must be relatively long.

For example, typically a control cycle for a controller in a photonic node would be of the order of hundreds of milliseconds, which in turn affects the time taken to introduce a channel at each node. As a link will require the introduction of a channel at a number of nodes, and as each channel must be sequentially introduced to each node before being introduced to the next node in the link, the introduction of channels along a chain of nodes using the prior art method can be unacceptably long (e.g. many seconds).

The present inventor has appreciated that this problem can be addressed by utilising a control system for the variable optical attenuator that utilises at least two gain values. A first (e.g. relatively high) gain value is used to ensure that the initial step-size (used after a channel has been introduced to the node) is relatively high, so that the VOA 16 relatively rapidly approaches the target radiation power level. However, when the gain has increased in this way, and many identical such control loops are concatenated, the present inventor has realised that this can lead to channel power instability because any small disturbance in power at the input to the chain is amplified, becoming a large disturbance at the chain output. This is because all nodes detect the disturbance and make an attempt to correct it at virtually the same time due to fast propagation of the optical signal compared to the time scales of the control system.

To prevent such an instability which can lead to a degradation in the performance of the traffic path (bit errors or complete loss of signal, or even disturbances on other optical channels due to dynamic range effects within optical amplifiers), the present inventor thus proposes that a second, lower value of the gain factor is subsequently used e.g. after a predetermined time period. The predetermined time period could be a predetermined number of control cycles, or once the optical output power level has reached a predetermined level e.g. after the error signal indicative of the difference between the target radiation power and the optical output power of the VOA has dropped to beneath a predetermined level.

Element 27 in Figure 5, which is coupled to the integral term 26', is shown as providing an input to the integral term, to vary the gain factor used by the integral term.

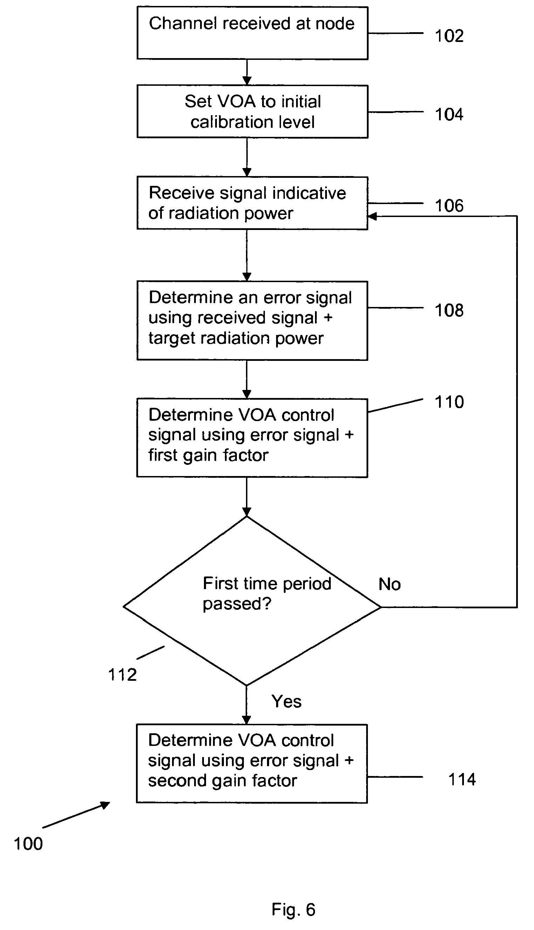

The operation of the controller will now be described with respect to Figure 6 (which shows a flow chart of a method followed by the device 10' including the controller 20') and Figure 7 (which is a graph illustrating the optical signal output power as a function of time of the device 10' as an optical signal is introduced to the device). Within Figure 7, the solid lines represent the ideal optical output power based upon the setting of the VOA requested by the controller 20' (assuming the VOA responded instantaneously to the control signal), whilst the dashed lines represent the actual optical output power from the optical device due to the changes in VOA setting requested by the controller 20'. It will be seen that the dashed lines lag the solid lines, as the device takes time to achieve the set level of attenuation after receiving each update in the control signal.

As shown in Figure 6, initially a channel is received at the optical network node containing the device 10' (step 102). It is assumed that the channel is a new channel to the node e.g. due to the provisioning of a new route through the node, or the restoration of a link through the node.

Typically, when no optical channel signal is provided to the device 10', the VOA 16 will be set to maximum attenuation, to prevent the onward transmission of noise. This maximum attenuation state (X) is shown in Figure 7, with the channel power at the node output being at the lowest level. Thus, the VOA 16 is in its "blocking" state.

Once the channel has been received at the node (step 102) then the VOA 16 will typically be set to an initial calibration level (step 104). Altering the attenuation of the VOA 16 to a predetermined "safe" attenuation level allows the measurement of the optical output power from the VOA for calibration purposes. The controller 20' will thus receive a signal indicative of the output radiation power (step 106) e.g. via the ADC 22.

As with the prior art, if the optical input power is measured as well as the optical output power, then the initial calibration step (step 104) need not be required.

Subsequently, the error signal is determined using the received signal indicative of the output signal power and a signal indicative of the target radiation power (step 108).

The control signal to set the attenuation of the VOA 16 is then calculated from the error signal, using a first gain value or factor (step 110). This first gain value is relatively high e.g. in the example shown in Figure 7, the gain value is one (unity), such that in a single control cycle the attenuation of the VOA is set such that the optical output power is substantially at the target radiation power level, due to the high loop gain used during the cycle. Thus, the transition from the quiescent, blocking state (state X) to the desired channel output power (state Z) occurs in two control cycles, with one control cycle including the initial calibration level (state Y).

After the VOA control signal calculated using the error signal and first gain factor has been output to the VOA 16, it is determined whether the first time period has passed (step 112).

Whether the first time period has passed (in which the first, relatively high, gain value is utilised) can be determined in any one or more of a number of ways. It can be determined based upon a predetermined number of control cycles having passed, with that predetermined number depending upon the value of the first gain factor e.g. the higher the gain factor, the fewer control cycles that will be required. Alternatively, whether the first time period has passed could be determined from measuring the optical output power from the VOA 16 and/or the device 10', and determining whether that optical output power is within a predetermined range of the target radiation power.

If the first time period has deemed not to have passed (e.g. not enough control cycles have passed, and/or the output power is not within a predetermined range of the target radiation power), then the control cycle (steps 106-110) are repeated, until the first time period is deemed to have passed.

Subsequently, the gain factor used by the control loop is altered, and subsequent VOA control signals are generated using the second, lower gain value or factor (step 114). In other words, the control loop again is reduced to a typical, normal working level (e.g. with the second gain value being less than a third of the value of the first gain value e.g. with the second gain factor being 0.2). The value of the second gain factor may depend upon the number of downstream nodes through which the channel will be transmitted, and can be selected such that the concatenated control loops of all of the downstream nodes do not produce instability in the signal power.

It shall be appreciated that the above embodiments of the present invention have been described by way of example only, and various alternatives will be apparent to the skilled person as falling within the scope of the claims.

For example, the controller has been described as comprising a control loop. It should be appreciated that the controller can be implemented using any appropriate processing element, including a dedicated circuit, a dedicated microprocessor, or a microprocessor which performs other functions. The processing element may be implemented using digital or analogue electronics or electrical circuits. The instructions for performing the relevant functional blocks of the control loop may be hard wired into the processing element, or may be provided as processor readable instructions stored in a programme memory or on a data carrier.

Whilst the above embodiments have been described as using two gain values or factors, it should be appreciated that the present invention could be implemented using three or more gain values e.g. with a first, relatively high gain value used in a first time period, a second, intermediate gain value used in a second time period, and a third, lowest gain value used in a third time period.

Whilst the above implementation has been described with respect to a device, or set of devices, within a single node, it should be appreciated that the present invention can be implemented across an optical network comprising a plurality of nodes.

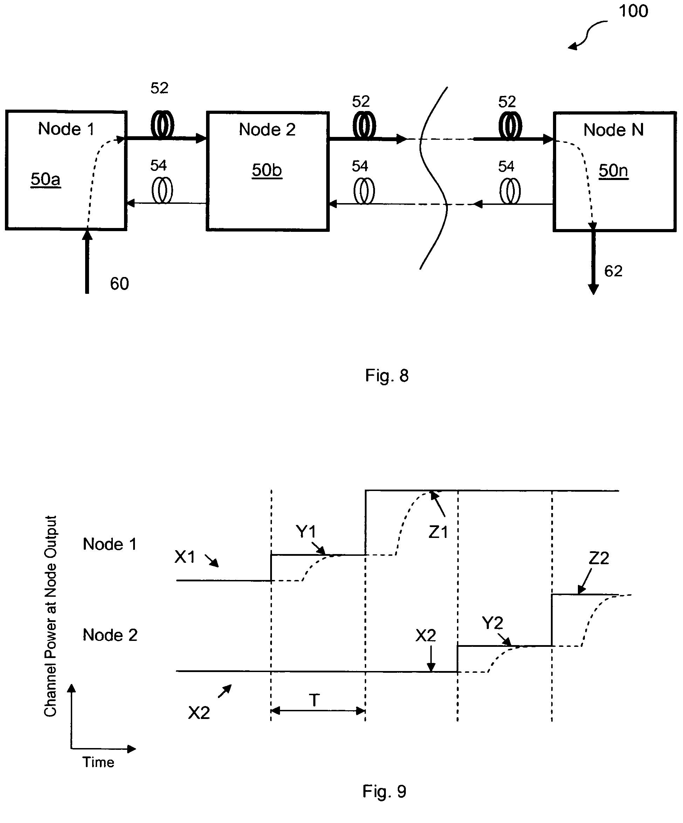

Figure 8 is a schematic diagram of an optical mesh network 100, in which only the nodes (50a, 50b...50n) are illustrated that form a link (a route through the mesh network) for a particular single channel. Each of the optical nodes is reconfigurable, and includes one wavelength selective switch, or apparatus that provides a similar function, at every node. Due to the connections made by the wavelength selective switches, the link for the particular single channel (e.g. an optical signal of predetermined wavelength) comprises a serial concatenation of the optical nodes. In this particular example, each node comprises a device 10' for performing routing (and levelling) i.e. the VOA 16 within each node is controlled so as to keep the optical power of the channel within acceptable performance limits.

Each node is connected to an adjacent node by one or more respective spans of optical fibre (52, 54). Only the optical channel transmitted in the desired traffic direction (along fibre spans 52, from node 50a to destination node 50n) is considered here; the reverse traffic direction (i.e. signals transmitted along optical fibre spans 54) is not considered.

The initial optical signal 60 is input to the first node 50a, and transmitted through each of the adjacent nodes to the destination node 50n, at which it leaves the reconfigurable network as an output signal 62.

At each node, the control loop gain is controlled as described above with respect to Figures 4-7, as the channel is introduced to each node.

Immediately after the channel has been established at each node output i.e. the channel is within a predetermined range of the target output power of a node, a signal is passed, typically via the OSC (Optical Supervisory Channel), to instruct the next node in the chain to begin introducing the channel. Thus, the signal to instruct the next node in the link to begin introducing the channel would normally be passed on once it is deemed that the first time period has passed (step 112 in Figure 6).

Thus, the next node in the link will begin introducing the channel as the gain factor of the present node is set to the second, lower value, thus reducing the likelihood of instability in the link. Further, in this way, at any given time, no more than one node in the link will be working at the higher, first gain value.

Figure 9 illustrates this introduction procedure, by indicating the optical output powers corresponding to the VOA attenuation control settings (solid lines) and the subsequent actual optical output power response (dotted lines underneath the solid lines) for the first and second nodes (50a, 50b) in the network 100 of Figure 8.

The T time period represents the control cycle period. The states X1, X2 represent the VOA being in the blocking (maximum attenuation) state, with states Y1, Y2 representing the respective VOA being in an initial calibration state, and Z1, Z2 representing the respective VOA receiving a control signal to reach the desired, target output power. In the example shown, it is assumed that the gain value used is unity, such that the introduction of the channel takes only two control cycles per node (rather than using the greater number of control cycles required by the prior art method).

Thus, it will be readily appreciated that an introduction of a channel in a chain of nodes using a method in accordance with an embodiment of the present invention can greatly increase the speed with which the channel is introduced to the chain, allowing a network to establish end-to-end transmission of an optical signal much more quickly than prior art methods.

## Claims

1. A control system (20') for a variable optical attenuator (16), the system comprising a processing element arranged to:
a. receive (106) a signal indicative of the radiation power of an optical signal output from a variable optical attenuator;
b. determine (108; 114) an error signal in dependence upon the received signal and a predetermined target radiation power level;
c. determine (110) a control signal for controlling the attenuation of the variable optical attenuator in dependence upon the error signal and a gain factor;
and **characterized by** being arranged to
d. repeat the operations of a. to c.,
wherein the control system is arranged to utilise a first value of the gain factor during a first time period (108); and a second, lower value of the gain factor during a second time period (116), and the first time period comprises a time interval after the optical signal has been introduced to the optical attenuator.

2. A control system as claimed in claim 1, wherein the system is arranged to switch to utilising the second value (114) from utilising the first value once the error signal is indicative of the radiation power of the output optical signal being within a predetermined range of the target radiation power level.

3. A control system as claimed in claim 1, wherein the control system is arranged to switch to utilising the second value (114) of the gain factor from utilising the first value of the gain factor a predetermined time period after a channel has been introduced to the optical attenuator.

4. A control system as claimed in any one of the above claims, wherein the control system is arranged to first provide a control signal to set (104) the attenuation of the variable optical attenuator to a predetermined safe attenuation value upon an optical signal being introduced to the optical attenuator, and subsequently perform the operations of a. to d.

5. A control system as claimed in any one of the above claims, wherein the control system is arranged to output the determined control signal every control cycle.

6. A control system as claimed in claim 6, wherein the first value of the gain factor is such that within three or less control cycles of introducing an optical signal to the variable attenuator, the error signal will be indicative of the radiation power of the output optical signal being substantially close to steady-state operation of the optical signal.

7. A control system as claimed in any one of the claims, wherein the second value of the gain factor is less than a third of the first value of the gain factor.

8. A method of controlling a variable optical attenuator, a method comprising;
a. receiving (106) a signal indicative of the radiation power of an optical signal output from a variable optical attenuator;
b. determining (108; 114) an error signal in dependence upon the received signal and a predetermined target radiation power level;
c. determining (110) a control signal for controlling the attenuation of the variable optical attenuator in dependence upon the error signal and a gain factor;
**characterized by**
d. repeating steps a. to c., wherein the control system is arranged to utilise a first value (108) of the gain factor during a first time period and a second, lower value (114) of the gain factor during a second time period, and the first time period comprises a time interval after the optical signal has been introduced to the optical attenuator.

9. A data carrier carrying computer readable instructions for controlling a processor to carry out the method of claim 8.

10. A control system (20') comprising:
a programme memory storing processor readable instructions; and
a processor configured to read and execute instructions stored in said programme memory,
wherein said processor readable instructions comprise instructions for controlling the processor to carry out the method of claim 8.

11. A device comprising at least one variable optical attenuator (16), and at least one control system (20') as claimed in any one of claims 1-7 or claim 10, wherein each of said at least one control system is coupled to said at least one variable optical attenuator for controlling the attenuation of said at least one variable optical attenuator.

12. An optical network (100) comprising a plurality of nodes (50a, 50b, 50n), with each of said nodes comprising at least one device as claimed in claim 11.

13. An optical network as claimed in claim 12, arranged to transmit at least one optical signal along a route comprising said plurality of nodes (50a, 50b, 50n), with each node on said route comprising at least one of said devices configured to control the power of said optical signal.

14. An optical network as claimed in claim 13, wherein each device on said route is arranged to utilise the same first and second values of the gain factor.

## Patentansprüche

1. Steuersystem (20') für einen optischen Dämpfungsregler (16), wobei das System ein Verarbeitungselement umfasst, dass ausgelegt ist zum:
a. Empfangen (106) eines Signals, das die Strahlungsleistung einer optischen Signalausgabe von einem optischen Dämpfungsregler anzeigt;
b. Bestimmen (108; 114) eines Fehlersignals in Abhängigkeit vom empfangenen Signal und einem vorbestimmten Ziel-Strahlungsleistungspegel;
c. Bestimmen (110) eines Steuersignals zum Steuern der Dämpfung des optischen Dämpfungsreglers in Abhängigkeit vom Fehlersignal und einem Verstärkungsfaktor;
und **dadurch gekennzeichnet, dass** es ausgelegt ist zum:
d. Wiederholen der Vorgänge von a. bis c.,
wobei das Steuersystem so ausgelegt ist, dass es einen ersten Wert des Verstärkungsfaktors während einer ersten Zeitspanne (108); und einen zweiten, niedrigeren Wert des Verstärkungsfaktors während einer zweiten Zeitspanne (116) verwendet, und die erste Zeitspanne ein Zeitintervall nach dem Einführen des optischen Signals in den optischen Dämpfungsregler umfasst.

2. Steuersystem nach Anspruch 1, wobei das System so ausgelegt ist, dass es vom Verwenden des ersten Wertes zum Verwenden des zweiten Wertes (114) wechselt, sobald das Fehlersignal anzeigt, dass die Strahlungsleistung des optischen Ausgangssignals innerhalb eines vorbestimmten Bereichs des Ziel-Strahlungsleistungspegels liegt.

3. Steuersystem nach Anspruch 1, wobei das Steuersystem so ausgelegt ist, dass es eine vorbestimmte Zeitspanne nach dem Einführen eines Kanals in den optischen Dämpfungsregler vom Verwenden des ersten Wertes des Verstärkungsfaktors zum Verwenden des zweiten Wertes (114) des Verstärkungsfaktors wechselt.

4. Steuersystem nach einem der vorhergehenden Ansprüche, wobei das Steuersystem so ausgelegt ist, dass es ein erstes Steuersignal bereitstellt, um die Dämpfung des optischen Dämpfungsreglers bei Einführung eines optischen Signals in den optischen Dämpfungsregler auf einen vorbestimmten sicheren Dämpfungswert zu setzen (104), und anschließend die Vorgänge a. bis d. durchführt.

5. Steuersystem nach einem der vorhergehenden Ansprüche, wobei das Steuersystem so ausgelegt ist, dass es das bestimmte Steuersignal jeden Steuerzyklus ausgibt.

6. Steuersystem nach Anspruch 6, wobei der erste Wert des Verstärkungsfaktors derart ist, dass innerhalb von drei oder weniger Steuerzyklen des Einführens eines optischen Signals in den Dämpfungsregler das Fehlersignal anzeigt, dass die Strahlungsleistung des optischen Ausgangssignals im Wesentlichen nahe dem stationären Betrieb des optischen Signals ist.

7. Steuersystem nach einem der vorhergehenden Ansprüche, wobei der zweite Wert des Verstärkungsfaktors weniger als ein Drittel des ersten Wertes des Verstärkungsfaktors ist.

8. Verfahren zur Steuerung eines optischen Dämpfungsreglers, wobei ein Verfahren umfasst:
a. Empfangen (106) eines Signals, das die Strahlungsleistung einer optischen Signalausgabe von einem optischen Dämpfungsregler anzeigt;
b. Bestimmen (108; 114) eines Fehlersignals in Abhängigkeit vom empfangenen Signal und einem vorbestimmten Ziel-Strahlungsleistungspegel;
c. Bestimmen (110) eines Steuersignals zum Steuern der Dämpfung des optischen Dämpfungsreglers in Abhängigkeit vom Fehlersignal und einem Verstärkungsfaktor;
**gekennzeichnet durch**
d. Wiederholen der Schritte a. bis c., wobei das Steuersystem so ausgelegt ist, dass es einen ersten Wert (108) des Verstärkungsfaktors während einer ersten Zeitspanne und einen zweiten, niedrigeren Wert (114) des Verstärkungsfaktors während einer zweiten Zeitspanne verwendet, und die erste Zeitspanne ein Zeitintervall nach dem Einführen des optischen Signal in den optischen Dämpfungsregler umfasst.

9. Datenträger, der computerlesbare Anweisungen zum Steuern eines Prozessors zum Ausführen des Verfahrens nach Anspruch 8 trägt.

10. Steuersystem (20'), umfassend:
einen Programmspeicher, der prozessorlesbare Anweisungen speichert; und
einen Prozessor, der so konfiguriert ist, dass er Anweisungen ausliest und ausführt, die in dem Programmspeicher speichert sind,
wobei die prozessorlesbaren Anweisungen Anweisungen zum Steuern des Prozessors zum Ausführen des Verfahrens nach Anspruch 8 umfassen.

11. Vorrichtung, umfassend mindestens einen optischen Dämpfungsregler (16) und mindestens ein Steuersystem (20') nach einem der Ansprüche 1 bis 7 oder Anspruch 10, wobei jedes des mindestens einen Steuersystems mit dem mindestens einen optischen Dämpfungsregler zum Steuern der Dämpfung des mindestens einen optischen Dämpfungsreglers gekoppelt ist.

12. Optisches Netz (100), umfassend eine Mehrzahl von Knoten (50a, 50b, 50n), wobei jeder der Knoten mindestens eine Vorrichtung nach Anspruch 11 umfasst.

13. Optisches Netz nach Anspruch 12, das so ausgelegt ist, dass es mindestens ein optisches Signal entlang eines Leitwegs sendet, der die Mehrzahl von Knoten (50a, 50b, 50n) umfasst, wobei jeder Knoten auf dem Leitweg mindestens eine der Vorrichtungen umfasst, die zum Steuern der Leistung des optischen Signals konfiguriert sind.

14. Optisches Netz nach Anspruch 13, wobei jede Vorrichtung auf dem Leitweg so ausgelegt ist, dass sie die ersten und zweiten Werte des Verstärkungsfaktors verwendet.

## Revendications

1. Système de commande (20') pour un atténuateur optique variable (16), le système comprenant un élément de traitement agencé pour effectuer :
a. la réception (106) d'un signal indiquant la puissance de rayonnement d'un signal optique délivré d'un atténuateur optique variable ;
b. la détermination (108 ; 114) d'un signal d'erreur en fonction du signal reçu et d'un niveau de puissance de rayonnement cible prédéterminé ;
c. la détermination (110) d'un signal de commande pour commander l'atténuation de l'atténuateur optique variable en fonction du signal d'erreur et d'un facteur de gain ;
et **caractérisé en ce qu'**il est agencé pour effectuer :
d. la répétition des opérations a. à c.,
dans lequel le système de commande est agencé pour utiliser une première valeur du facteur de gain au cours d'une première période de temps (108) ; et une deuxième valeur inférieure du facteur de gain au cours d'une deuxième période de temps (116), et la première période de temps comprend un intervalle de temps après l'introduction du signal optique dans l'atténuateur optique.

2. Système de commande selon la revendication 1, dans lequel le système est agencé pour passer de l'utilisation de la première valeur à l'utilisation de la deuxième valeur (114) lorsque le signal d'erreur indique que la puissance de rayonnement du signal optique délivré est dans une plage prédéterminée du niveau de puissance de rayonnement cible.

3. Système de commande selon la revendication 1, dans lequel le système de commande est agencé pour passer de l'utilisation de la première valeur du facteur de gain à l'utilisation de la deuxième valeur (114) du facteur de gain à une période de temps prédéterminée après l'introduction d'un canal dans l'atténuateur optique.

4. Système de commande selon l'une quelconque des revendications précédentes, dans lequel le système de commande est agencé pour fournir d'abord un signal de commande afin de régler (104) l'atténuation de l'atténuateur optique variable à une valeur d'atténuation sûre prédéterminée à l'introduction d'un signal optique dans l'atténuateur optique, puis effectuer les opérations a. à d.

5. Système de commande selon l'une quelconque des revendications précédentes, dans lequel le système de commande est agencé pour délivrer le signal de commande déterminé à chaque cycle de commande.

6. Système de commande selon la revendication 6, dans lequel la première valeur du facteur de gain est telle que, à trois cycles de commande ou moins de l'introduction d'un signal optique dans l'atténuateur variable, le signal d'erreur indique que la puissance de rayonnement du signal optique délivré est sensiblement proche du fonctionnement à état constant du signal optique.

7. Système de commande selon l'une quelconque des revendications précédentes, dans lequel la deuxième valeur du facteur de gain est inférieure à un tiers de la première valeur du facteur de gain.

8. Procédé de commande d'un atténuateur optique variable, le procédé comprenant :
a. la réception (106) d'un signal indiquant la puissance de rayonnement d'un signal optique délivré d'un atténuateur optique variable ;
b. la détermination (108 ; 114) d'un signal d'erreur en fonction du signal reçu et d'un niveau de puissance de rayonnement cible prédéterminé ;
c. la détermination (110) d'un signal de commande pour commander l'atténuation de l'atténuateur optique variable en fonction du signal d'erreur et d'un facteur de gain ;
**caractérisé par** :
d. la répétition des étapes a. à c., dans lequel le système de commande est agencé pour utiliser une première valeur (108) du facteur de gain au cours d'une première période de temps et une deuxième valeur inférieure (114) du facteur de gain au cours d'une deuxième période de temps, la première période de temps comprenant un intervalle de temps après l'introduction du signal optique dans l'atténuateur optique.

9. Support de données portant des instructions lisibles par ordinateur pour commander à un processeur d'effectuer le procédé selon la revendication 8.

10. Système de commande (20') comprenant :
une mémoire de programme mémorisant des instructions lisibles par processeur ; et
un processeur configuré pour lire et exécuter des instructions mémorisées dans ladite mémoire de programme,
dans lequel lesdites instructions lisibles par processeur comprennent des instructions pour commander au processeur d'effectuer le procédé selon la revendication 8.

11. Dispositif comprenant au moins un atténuateur optique variable (16) et au moins un système de commande (20') selon l'une quelconque des revendications 1 à 7 ou 10, dans lequel chacun dudit au moins un système de commande est couplé au dit au moins un atténuateur optique variable pour commander l'atténuation dudit au moins un atténuateur optique variable.

12. Réseau optique (100) comprenant une pluralité de noeuds (50a, 50b, 50n), chacun desdits noeuds comprenant au moins un dispositif selon la revendication 11.

13. Réseau optique selon la revendication 12, agencé pour émettre au moins un signal optique le long d'un itinéraire comprenant ladite pluralité de noeuds (50a, 50b, 50n), chaque noeud dudit itinéraire comprenant au moins l'un desdits dispositifs configurés pour commander la puissance dudit signal optique.

14. Réseau optique selon la revendication 13, dans lequel chaque dispositif dudit itinéraire est agencé pour utiliser la même première valeur et la même deuxième valeur du facteur de gain.
